# EUROPEAN PATENT SPECIFICATION

(11) **EP 3 656 953 B1**
(45) Date of publication and mention of the grant of the patent: **27.01.2021**
(21) Application number: 18207635.6
(22) Date of filing: 21.11.2018
(51) Int. Cl.: E05B 47/00, H01F 7/18

(54) **ACTUATOR WITH IMPROVED SAFETY**
AKTUATOR MIT VERBESSERTER SICHERHEIT
ACTIONNEUR À SÉCURITÉ AMÉLIORÉE

(43) Date of publication of application: 27.05.2020
(73) Proprietor: Meteor S.a.s. di Fabio Dell'Oglio & C., 31010 Mareno di Piave (Treviso) (IT)
(72) Inventor: BORTOT, Franco, 32043 Cortina d'Ampezzo (Belluno) (IT); BURATTO, Alessandro, 31049 Valdobbiadene (Treviso) (IT)
(74) Representative: Lunati & Mazzoni S.r.L.

(56) References cited:
- EP-A1- 2 264 722
- EP-A2- 2 282 125
- WO-A1-2016/155818
- WO-A1-2018/032511

## Description

The present invention relates to an actuator with improved safety of the type specified in the preamble of the first claim.

In particular, the present invention relates to an actuator with improved safety for valve elements and/or locks and door locks, for example on household appliances. As is known, conventional household appliances are equipped with door-locking systems or devices generally comprising at least one door-locking hook, transmission means suitable to transmit motion to the aforesaid hook, and actuators suitable to move the hook indirectly, in detail through transmission means.

The actuators are generally equipped with at least one rotary electric motor which, by rotating, can reach one or more stable equilibrium positions coinciding with predetermined positions of the hook. For example, these electric motors define at least two stable equilibrium positions coinciding with a position in which the hook is retracted with respect to the door, and a position in which the hook interferes with the door so as to block its travel.

A device as described above is found, for example, in patent application EP-A-2282125.

The above-mentioned application, in particular, includes a conventional example of an actuator currently on the market.

The actuators comprise a rotary electric motor operatively connected to power supply terminals suitable for supplying the electrical energy needed for the operation thereof.

The electric motor is therefore operatively connected to an eccentric device, or a cam, through which motion can be transmitted to the movement means. Therefore, the actuation performed by the electric motor is of the conventional type and involves the connection of the eccentric device to the transmission shaft of the electric motor itself, and the controlled, complete or alternating rotation of the electric motor itself to reach the stable equilibrium positions.

Similarly, these devices are used for the actuation of valve elements, for example in discharge pipes of household appliances or air-steam valves. In this case, the stable equilibrium positions substantially correspond to opening or closing positions of the pipe passage.

Therefore, the described prior art has a few major drawbacks.

In particular, the actuators according to the prior art provide that the actuation is always performed on command, that is by supplying power to the electric motor and spending energy.

Therefore, a consequent drawback of the prior art is that the actuators must always be actuated electrically in order to reach the different stable equilibrium positions.

Moreover, from the above it also follows that, due to the cyclical nature of the actuation of the motor itself, the latter has indefinite endurance, and in some cases unexpected breakage or failure of the actuation system can occur, resulting in the impossibility to use the system or device correctly.

In conclusion, if the power supply is interrupted or the power supply device suffers a failure, the actuators known in the current state of the art do not allow satisfactory restoration of at least one condition of use, for example corresponding to one of the stable equilibrium positions.

In this context, the technical task underlying the present invention is to devise actuators, which are capable of substantially obviating at least some of the above-mentioned drawbacks.

Within the scope of said technical task, a major object of the invention is to obtain an actuator with improved safety, which allows stable equilibrium positions to be reached without having to be electrically powered in each case.

Accordingly, another major object of the invention is to provide an actuator, which allows significant energy savings.

In addition, a major object of the invention is to provide an actuator having greater endurance compared to the devices of the current state of the art.

In conclusion, a further object of the invention is to provide an actuator, which allows at least one predetermined condition of use to be restored in case of power failure. The technical task and the specified objects are achieved by means of an actuator with improved safety (1) as claimed in appended claim 1.

Preferred technical solutions are set forth in the dependent claims.

The features and advantages of the invention will be apparent from the detailed description of preferred embodiments of the invention, with reference to the accompanying drawings, in which:

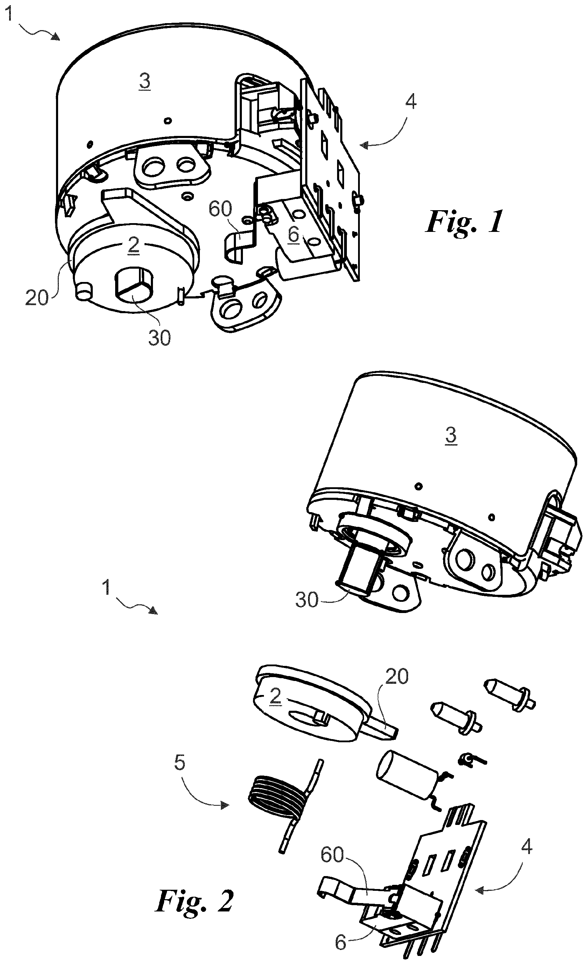

**Fig. 1** is a perspective view of an actuator with improved safety according to the invention;
**Fig. 2** is an exploded view of an actuator with improved safety according to the invention;

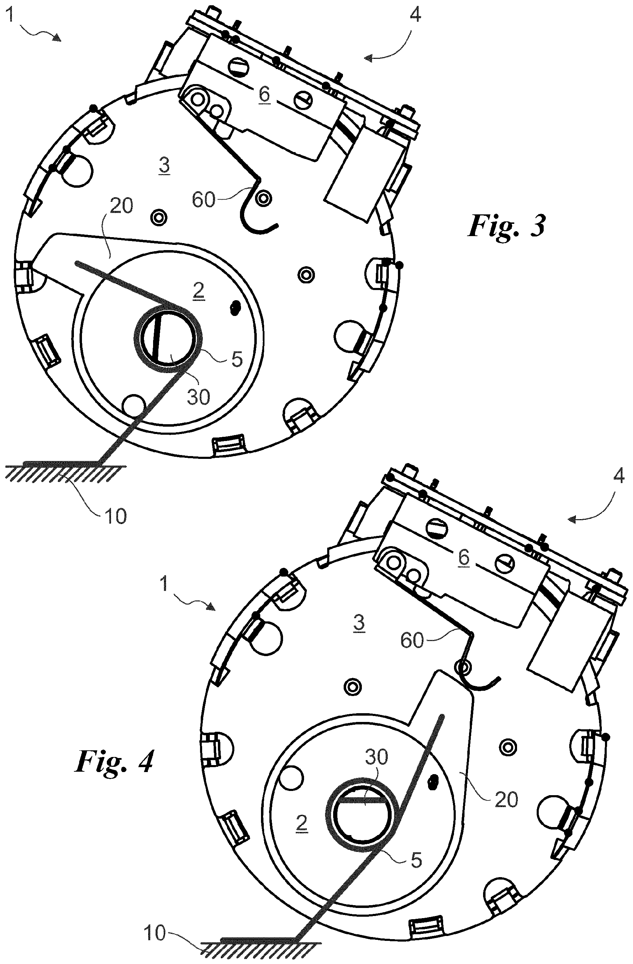

**Fig. 3** is a front view of an actuator with improved safety according to the invention in a preferred configuration and in the interference position;
**Fig. 4** is a front view of an actuator with improved safety according to the invention in a preferred configuration and in the non-interference position;
**Fig. 5** is a graph showing the supply voltage time course of an actuator with improved safety according to the invention with alternating bipolar supply voltage;
**Fig. 6** is a graph showing the supply voltage time course of an actuator with improved safety according to the invention with alternating supply voltage downstream of the actuated diode;
**Fig. 7** is a schematic diagram of part of the circuit provided by the switch of an actuator with improved safety according to the invention including a single diode;
**Fig. 8** is a schematic diagram of part of the circuit provided by the switch of an actuator with improved safety according to the invention including one diode and a capacitor arranged parallel to the motor coil; and
**Fig. 9** is a graph showing the supply voltage time course of an actuator with improved safety according to the invention whose switch includes a capacitor.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, measure, shape, or geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

The measurements and the data reported in this text are to be considered, unless otherwise indicated, as carried out in the International Standard Atmosphere ICAO (ISO 2533:1975).

With reference to the Figures, the actuator with improved safety 1 according to the invention is indicated as a whole by the numeral **1.**

The actuator with improved safety 1 is preferably, but not exclusively, suitable to be used in products such as, for example, household appliances.

In particular, it can actuate or control a mechanical valve or a lock, and much more. Therefore, for example, a mechanical valve, for example a throttle valve, may include the actuator with improved safety 1 and obstruction means. The obstruction means may consist of a slider designed to free or occupy a passage to allow or block the passage of a fluid inside a channel or pipe.

Therefore, for example, the actuator with improved safety 1 can be operatively connected to the obstruction means in such a way as to control the obstruction means.

Alternatively, the actuator with improved safety 1 can be part of a lock or door-locking device. Devices or locks of this type are, for example, present inside pyrolytic ovens to ensure the closing of the oven door and allow the usual operations for cleaning the pyrolytic oven in safety.

In this case, the lock may comprise an actuator with improved safety 1 and at least one door-locking hook.

Furthermore, the door-locking hook can be directly or indirectly operatively connected to the actuator with improved safety 1 in such a way as to allow the latter to control the hook itself.

In any case, preferably, the actuator with improved safety 1 includes at least one interfering device **2,** a motor **3** and a power supply **4.**

The actuator with improved safety 1 preferably, but not necessarily, may also include a frame **10.**

The frame 10 is, for example, a containment body or a supporting structure above which some components of the actuator with improved safety 1 can be constrained, removably or not.

Preferably, in fact, the frame 10 is suitable to support at least the interfering device 2 and the motor 3. In this case, the frame 10 allows the actuator 1 to be provided with a containment casing, which is compact and easily installable inside systems that comprise, for example, valves or locks.

The interfering device 2 is preferably suitable to interact with one or more external elements.

For example, in the examples of use of the above cases, the interfering device 2 may be suitable to rotate valve elements, such as the above-described obstruction means, or may be suitable to push a slider in order to open or close a door-locking hook.

Therefore, the interfering device 2 preferably defines at least one non-interference position and one interference position.

Substantially, the non-interference position is a position in which the interfering device 2 does not interact with external objects such as the valve elements or door-locking hooks, or the transmission elements suitable to allow the hooks or the valve elements to move.

Vice versa, the interference position is a position in which the interfering device 2 is in contact with and actuates the aforementioned objects.

Therefore, the interfering device 2 can define a plurality of different interference positions, of which the end or end-of-travel position, for example, represents the position in which the valve or the hook has reached the stable-equilibrium operating position.

The interfering device 2, in general, is suitable to be moved and cause movements in order to provide the different positions.

The movement can thus be rotary or linear depending on the configurations assumed by the actuator 1.

If the movement of the interfering device 2 is rotary, the interfering device 2 preferably includes an eccentric body **20.**

The eccentric body 20 is, for example, a substantially annular body whose external diameter varies along the perimeter in such a way as to provide more or less projecting areas. Examples of this type are represented, for example, by common cams.

Instead, if the movement is linear, for example rectilinear, the interfering device 2 preferably includes a linear actuator.

Therefore, the linear actuator substantially occurs as a mechanical element including a guide and a slider, inside which the slider can be moved along a predetermined direction in order to provide a plurality of different positions.

For example, the guide can be constrained along part of the frame 10.

The motor 3 is preferably of the electric synchronous type. Motors of this type are known in the current state of the art and are rotary electric motors, generally in alternating current, whose rotation speed is synchronised with the electrical frequency.

The motor 3 can therefore be of various types, preferably a single-phase permanent-magnet motor. The motor 3 therefore preferably comprises at least one coil powered by electrical energy.

The motor 3 is preferably mechanically connected to the interfering device 2. The term mechanically connected does not mean that the motor 3 is necessarily directly connected and constrained to the interfering device 2, but that it is suitable to mechanically interact therewith also indirectly, for example through transmission means.

Preferably, the motor 3 is suitable to cause at least one movement of the interfering device 2. In this case too, as already noted, the movement can be linear or curvilinear, for example resulting from a rotation.

The motor 3, in any case, preferably includes at least one transmission shaft 30.

The transmission shaft 30 is a mechanical element rotating integrally with the rotation imparted by the motor 3, in particular exerted by the coil, and is suitable to transmit motion to elements external to the motor 3, such as, in this case, the interfering device 2.

If the interfering device 2 includes an eccentric body 20, the latter is preferably constrained to the transmission shaft 30 and rotates integrally with the transmission shaft 30.

If the interfering device 2 includes a linear actuator, the latter is constrained to the transmission shaft 30 by means of a transmission member and moved proportionally to the transmission shaft 30. The transmission member may be of the conventional type and include, for example, a crown wheel compatible with part of the slider of the linear actuator so that the crown, when rotated integrally with the transmission shaft 30, imparts at least one rectilinear movement to the slider.

The power supply 4 is preferably of the electric type. Moreover, it is preferably operatively connected to the motor 3 so as to power it.

The power supply 4 may also be arranged inside or above the frame 10 and can form a compact element with the interfering device 2 and the motor 3. Otherwise, the power supply 4 can be external and may also include a transformer suitable to interact with a domestic electricity network.

In the latter case, for example, the motor 3 may comprise electrical connection means suitable to allow connection of the motor 3 to an external power supply 4. The power supply 4, especially if internal, may also comprise a rechargeable battery, or provide for the use of disposable batteries inside a compartment.

In any case, preferably, the power supply 4 is suitable to supply the motor 3 with at least one bipolar or unipolar alternating supply voltage.

When speaking of supplying power to the motor 3, it is meant the supply downstream of the power supply 4 and not also the upstream supply of the power supply 4. This means that, for example, the power supply 4 may always be supplied, upstream, with alternating bipolar voltage throughout the operation of the actuator 1.

Therefore, the supply voltage is substantially the voltage at the terminals of the motor 3 or, more in detail, of the coil.

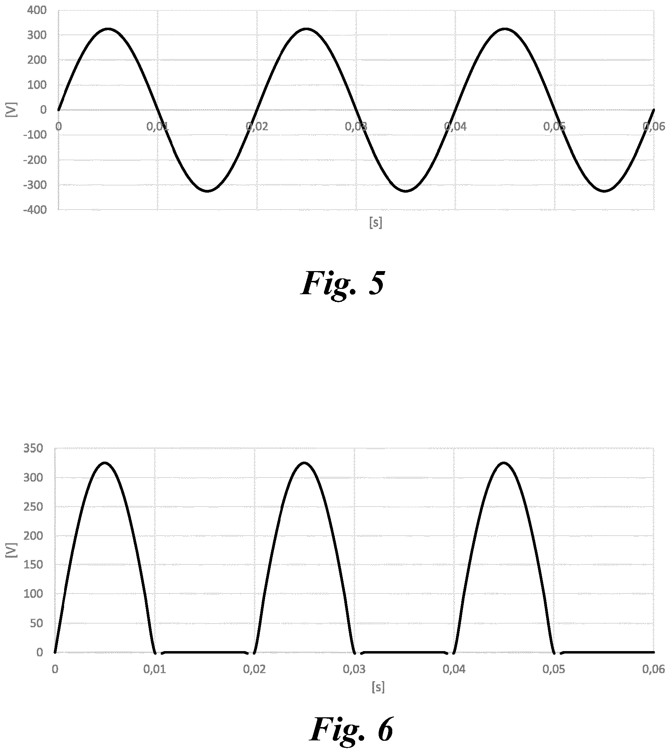

Instead, when speaking of bipolar voltage, it is meant the voltage resulting from a dual-polarity current, preferably of the alternating type, as in the case of the well-known alternating current. An example of this course is shown in Fig. 5.

In the case of unipolar voltage, it is preferably meant the voltage resulting from a unipolar alternating current, i.e. that does not reverse its polarity. A non-limiting example of this course is shown in Fig. 6.

In physical terms, when the motor 3 is powered by a bipolar alternating voltage, it is actuated and then rotates the transmission shaft 30, consequently moving the interfering device 2.

Conversely, when the motor 3 is powered by a unipolar voltage, alternating or not, it is not actuated and does not rotate the transmission shaft 30. The application of a non-zero voltage, however, maintains the motor 3 locked in a predetermined position.

The actuator with improved safety 1 may also comprise an elastic return device 5. Preferably, the elastic return device 5 is suitable to exert an elastic return force on the interfering device 2 when the interfering device 2 passes from the interference position to the non-interference position.

Alternatively, the elastic return device 5 could exert an elastic return force on the interfering device 2 when the interfering device 2 passes from the non-interference position to the interference position.

The elastic return device 5 can therefore be at least partially constrained to the frame 10, or to the motor 3, so as to interact between the interfering device 2 and a fixed point.

In general, the elastic return device 5 includes an elastically deformable element suitable to expand at least between the interference and non-interference positions defined by the interfering device 2.

In greater detail, preferably, the elastic return device 5 includes a spring.

If the actuator with improved safety 1 includes a rotating interfering device 2, as in the case of the eccentric body 20, then the elastic return device 5 preferably includes a torsional spring at least partially constrained to the interfering device 2 and the frame 10.

If the actuator with improved safety 1 includes a linearly moving interfering device 2, as in the case of the linear actuator, then the elastic return device 5 preferably includes a linear spring at least partially constrained to the interfering device 2 and the frame 10.

Preferably, in any case, the elastic return means 5 oppose the movement of the motor 3. Therefore, the motor 3 moves the interfering device 2 in opposition to the elastic return device 5.

More generally, the actuator 1 could also not comprise the elastic return device 5. In any case, however, the motor 3 preferably moves the interfering device 2 in opposition to an opposing force, whether derived from the outside or from the elastic return device 5.

The opposing force in the absence of the elastic return device 5 could be an external force such as a weight force exerted by a weight constrained to the interfering device 2, or other types of forces acting in opposition to the motor 3. Another example of such a force could be a traction force exerted by a user who tries to open a lock including the actuator 1, or a force resulting from the pressure exerted by the internal environment of a pyrolytic oven on the door when the latter is operatively connected to the actuator 1, in particular to the interfering device 2.

The opposing force exerted by the elastic return device 5 coincides with the elastic return force.

The actuator with improved safety 1 advantageously also comprises a switch 6.

The switch 6 is preferably operatively at least connected to the power supply 4. Furthermore, the switch 6 is preferably actuated by the interference device 2 in at least one of the interference and non-interference positions, so as to switch the supply voltage at least from a bipolar alternating voltage to an unipolar alternating voltage, or vice versa.

Preferably, but not necessarily, the switch 6 is actuated by the interference device 2 when the latter does not interact with any external element. Therefore, substantially, the interference device 2 preferably passes from interacting with the outside, for example with obstruction means or with a door-locking hook, to interacting with the switch 6.

In greater detail, the switch 6 preferably comprises a diode.

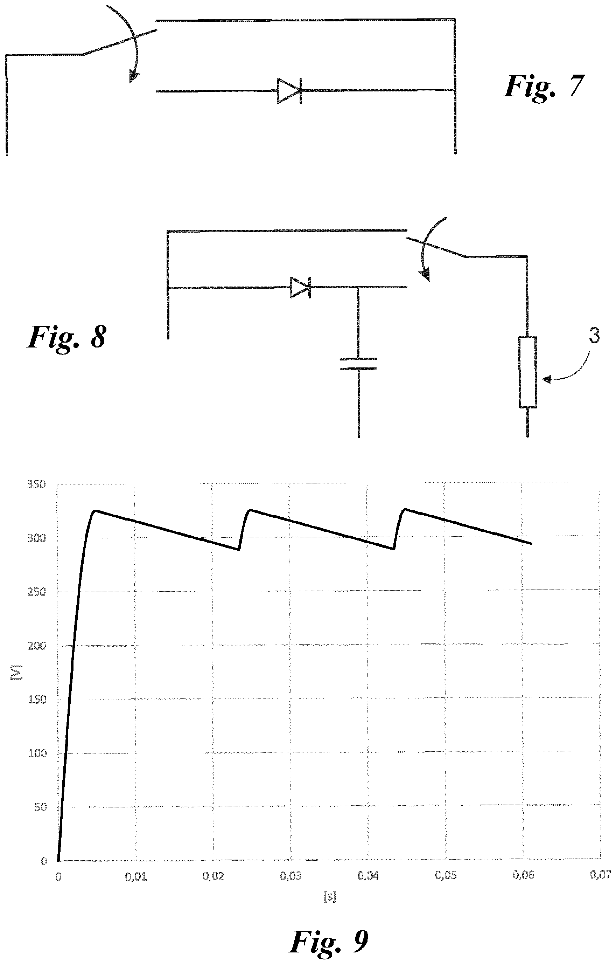

This diode is therefore suitable to provide the alternating unipolar supply voltage. To this end, for example, the switch 6 provides a common switch circuit in which at least an input current can be provided, which can run along a free arm, or along an arm including a diode, as schematically shown in Fig. 7.

Therefore, the switch 6 is preferably arranged between the motor 3 and the power supply 4 so as to allow the switched current, and therefore the switched voltage, to be directly released to the motor 3.

In this sense, the switch 6 can also be operatively connected to the motor 3. Alternatively, the switch 6 may be included within the power supply 4, especially if the latter is included in the frame 10, and therefore may be not directly connected to the motor 3.

The actuation of the switch 6 preferably occurs mechanically.

Therefore, the switch 6 preferably includes at least one actuating lever 60.

The actuating lever 60 can be part of the interruption means included in the switch 6, or the lever can actuate the interruption means of the switch 6. In other words, the switch lever 60 can actuate the switching of the switch 6 directly or indirectly. Preferably, the actuating lever 60 is of the elastic type and is suitable to actuate the switch 6 when strained, in particular by the interfering device 2.

The interfering device 2 also strains the actuating lever 60 so as to actuate the switch 6 exclusively in a predetermined interference or non-interference position.

In order to improve the mechanical performance, the switch 6 may also include a capacitor. Preferably, in this case, the capacitor is electrically arranged in parallel with respect to part of the motor 3, in particular the coil of the motor 3, so that the alternating unipolar supply voltage is always non-zero in use.

In particular, the capacitor preferably stores the electrical energy required to stabilize the motor power supply process 3. In fact, as the interfering device 2 is connected to the elastic return device 5 and the transmission shaft 30, the motor 3 is preferably affected by fluctuations due to the exercise of the spring elastic return force.

The stabilization of the power supply and the provision of a voltage that is as stable as possible allows the fluctuations of the motor 3 and of all the components connected thereto to be greatly reduced.

The operation of the actuator with improved safety 1 previously described in structural terms is or can be as follows.

In a preferred configuration, the interfering device 2 interferes with an external element, such as obstruction means of a mechanical valve or a door-locking hook of a lock.

Upon activation of the actuator with improved safety 1 through the power supply 4, for example controllable from the outside by a push-button panel or other systems as already known in the current state of the art, the motor 3 moves the interfering device 2 so that the latter places itself in at least one non-interference position. The interfering device 2 thus moves away from the interference position in opposition to the elastic return device 5 and actuates the switch 6 by means of the switch lever 60. Alternatively, the interfering device 2 moves freely and then the motor 3 opposes a generic opposing force.

The switch 6 switches the power supply to the motor 3, or better put, switches the voltage signal reaching the coil of the motor 3 from the bipolar alternating type to the unipolar alternating type.

If the switch 6 comprises only one diode, the interfering device 2 is kept in the non-interference position in a discontinuous manner and describes fluctuations or jumps proportional to the jumps of the motor 3. These fluctuations are due to the voltage signal portions in which the voltage is zero, and therefore in which the elastic return device 5 tends to bring the interfering device 2 back to the starting interference position.

If the switch 6 also includes a capacitor, as shown schematically in Fig. 8, the fluctuations are reduced in amplitude till they are substantially zero. The latter situation is shown by way of example in Fig. 9.

Once the power supply 4 has been turned off by command or when the power supply is interrupted due to failures of the power supply 4, the interfering device 2 is brought back to the starting interference position by the elastic return device 5 or by an external opposing force.

The actuator with improved safety 1 according to the invention achieves important advantages.

In fact, the actuator with improved safety 1 allows the different stable equilibrium positions, in this case at least the interference position in the preferred configuration described above, to be reached without having to electrically actuate the actuation and safety means 1 on command.

Consequently, this aspect reduces the energy necessary for carrying out the normal operations to which the actuator 1 is subjected.

Using a mechanical device for movement along one direction makes it possible to reduce the use of electronic means and therefore also allows a greater endurance of the actuation and safety means even in the face of reasonable costs.

In conclusion, in the preferred configuration, the actuator with improved safety 1 guarantees restoration of the predetermined conditions of use of the actuator 1 and the devices on which it is placed, such as a valve or a lock, in case of power failure. The invention is susceptible of variations falling within the scope of the inventive concept as defined by the claims.

For example, the output unipolar voltage could be derived from a direct current, and therefore the switch 6 could actuate an AC/DC converter so as to supply the motor 3 with a constant and polarized current, hence a constant and polarized voltage. In this context, all details are replaceable by equivalent elements, and the materials, shapes and dimensions may be any materials, shapes and dimensions.

## Claims

1. An actuator with improved safety (1) comprising:
- an interfering device (2) suitable to interact with one or more external elements and defining at least one non-interference position and at least one interference position,
- at least one synchronous electric motor (3) mechanically connected to said interfering device (2) and suitable to cause at least one movement of said interfering device (2),
- a power supply (4) operatively connected to said motor (3) and suitable to supply said motor (3) with at least one alternating bipolar and unipolar supply voltage, and **characterised in that** it comprises
- a switch (6) operatively connected to said power supply (4) and actuated by said interfering device (2) in one of said positions so that said supply voltage can be switched at least from an alternating bipolar voltage to an alternating unipolar voltage, or vice versa,
- said motor (3) moving said interfering device (2) in opposition to an opposing force.

2. The actuator with improved safety (1) according to claim 1, comprising an elastic return device (5) suitable to exert an elastic return force on said interfering device (2) when said interfering device (2) passes from said interference position to said non-interference position, or vice versa, and wherein said opposing force coincides with said elastic return force.

3. The actuator with improved safety (1) according to claim 1, wherein said opposing force is a force external to said actuator coinciding with the weight force exerted by a weight constrained to said interfering device (2).

4. The actuator with improved safety (1) according to at least one of the preceding claims, wherein said switch (6) includes a diode and said alternating unipolar supply voltage is provided by said diode.

5. The actuator with improved safety (1) according to at least one of the preceding claims, wherein said switch (6) includes a capacitor electrically arranged in parallel with respect to part of said motor (3) so that said alternating unipolar supply voltage is always non-zero in use.

6. The actuator with improved safety (1) according to at least one of the preceding claims, wherein said elastic return device (5) includes an elastically deformable element suitable to expand at least between said positions.

7. The actuator with improved safety (1) according to at least one of the preceding claims, comprising a frame (10) suitable to support said interfering device (2) and said motor (3) and wherein said motor (3) includes a transmission shaft (30) and said interfering device (2) includes an eccentric body (20) constrained to said transmission shaft (30) and rotating integrally with said transmission shaft (30), said spring being of the torsional type and at least partially constrained to said eccentric body (20) and to said frame (10).

8. The actuator with improved safety (1) according to at least one of the preceding claims, comprising a frame (10) suitable to support said interfering device (2) and said motor (3) and wherein said motor (3) includes a transmission shaft (30) and said interfering device (2) includes a linear actuator constrained to said transmission shaft (30) by means of a transmission member and moved proportionally to the rotation of said transmission shaft (30), said spring being of the linear type and at least partially constrained to said linear actuator and to said frame (10).

9. The actuator with improved safety (1) according to at least one of the preceding claims, wherein said motor (3) is of the single-phase permanent-magnet type.

10. The actuator with improved safety (1) according to at least one of the preceding claims, wherein said switch (6) includes an actuating lever (60) of the elastic type suitable to actuate said switch (6) when strained, and said interfering device (2) strains said actuating lever (60) exclusively in one of said predetermined positions.

11. A mechanical valve including an actuator with improved safety (1) according to at least one of the preceding claims, said obstruction means being operatively connected to said actuator (1) and controlled by said actuator (1).

12. A lock including a door-locking hook and an actuator with improved safety (1) according to at least one of claims 1-8, said door-locking hook being operatively connected to said actuator (1) and controlled by said actuator (1).

## Patentansprüche

1. Aktuator mit verbesserter Sicherheit (1), umfassend:
- eine interferierende Vorrichtung (2), die geeignet ist, mit einem oder mehreren externen Elementen zu interagieren und mindestens eine Nicht-Interferenz-Position und mindestens eine Interferenz-Position definiert,
mindestens einen elektrischen Synchronmotor (3), der mechanisch an die genannte interferierende Vorrichtung (2) angeschlossen und geeignet ist, mindestens eine Versetzung der genannten interferierenden Vorrichtung (2) herbeizuführen,
- ein elektrisches Netzteil (4), das operativ an den genannten Motor (3) angeschlossen und geeignet ist, den genannten Motor (3) mit mindestens einer bipolaren und monopolaren Wechselspannung zu speisen,
und **dadurch gekennzeichnet, dass** er Folgendes umfasst:
- einen Schalter (6), der operativ an das genannte Netzteil (4) angeschlossen ist und von der genannten interferierenden Vorrichtung (2) in einer der genannten Positionen betätigt wird, so dass die genannte Versorgungsspannung mindestens zwischen bipolarer Wechselspannung und monopolarer Wechselspannung oder umgekehrt umgeschaltet wird,
- wobei der genannte Motor (3) die genannte interferierende Vorrichtung (2) entgegengesetzt zu einer Gegenkraft bewegt.

2. Aktuator mit verbesserter Sicherheit (1) nach Anspruch 1, umfassend einen Rückfedermechanismus (5), der geeignet ist, eine Rückfederkraft auf die genannte interferierende Vorrichtung (2) auszuüben, wenn die genannte interferierende Vorrichtung (2) von der genannten Interferenz-Position in die genannte Nicht-Interferenz-Position übergeht oder umgekehrt, und bei dem die genannte Gegenkraft mit der genannten Rückfederkraft übereinstimmt.

3. Aktuator mit verbesserter Sicherheit (1) nach Anspruch 1, bei dem die genannte Gegenkraft eine Kraft außerhalb des Aktuators ist und mit der von einem mit der genannten interferierenden Vorrichtung (2) verbundenen schweren Körper ausgeübten Gewichtskraft übereinstimmt.

4. Aktuator mit verbesserter Sicherheit (1) nach mindestens einem der vorangegangenen Ansprüche, bei dem der genannte Schalter (6) eine Diode einschließt und die genannte monopolare Wechselspannung von der genannten Diode erzeugt wird.

5. Aktuator mit verbesserter Sicherheit (1) nach mindestens einem der vorangegangenen Ansprüche, bei dem der genannte Schalter (6) einen im Verhältnis zu einem Teil des genannten Motors (3) elektrisch parallel angeordneten Kondensator einschließt, damit die genannte monopolare Wechselspannung bei Betrieb nie null ist.

6. Aktuator mit verbesserter Sicherheit (1) nach mindestens einem der vorangegangenen Ansprüche, bei dem der Rückfedermechanismus (5) ein elastisch verformbares Element umfasst, das geeignet ist, sich mindestens zwischen den genannten Positionen auszudehnen.

7. Aktuator mit verbesserter Sicherheit (1) nach mindestens einem der vorangegangenen Ansprüche, umfassend einen Rahmen (10), der geeignet ist, die genannte interferierende Vorrichtung (2) und den genannten Motor (3) zu tragen und bei dem der genannte Motor (3) eine Antriebswelle (30) einschließt und die genannte interferierende Vorrichtung (2) einen an der genannten Antriebswelle (30) befestigten und mit der genannten Antriebswelle (30) gemeinsam drehenden exzentrischen Körper (20) einschließt, wobei es sich bei der genannten Feder um eine Torsionsfeder handelt und diese mindestens teilweise an dem genannten exzentrischen Körper (20) und mindestens teilweise an dem genannten Rahmen (10) befestigt ist.

8. Aktuator mit verbesserter Sicherheit (1) nach mindestens einem der vorangegangenen Ansprüche, umfassend einen Rahmen (10), der geeignet ist, die genannte interferierende Vorrichtung (2) und den genannten Motor (3) zu tragen und bei dem der genannte Motor (3) eine Antriebswelle (30) einschließt und die genannte interferierende Vorrichtung (2) einen an der genannten Antriebswelle (30) mittels eines Übertragungsorgans befestigten und proportional zur Drehung der genannten Antriebswelle (30) bewegten linearen Aktuator einschließt, wobei es sich bei der genannten Feder um eine lineare Feder handelt und diese mindestens teilweise an dem genannten linearen Aktuator und mindestens teilweise an dem genannten Rahmen (10) befestigt ist.

9. Aktuator mit verbesserter Sicherheit (1) nach mindestens einem der vorangegangenen Ansprüche, bei dem der genannte Motor (3) einphasigen Typs mit Dauermagnet ist.

10. Aktuator mit verbesserter Sicherheit (1) nach mindestens einem der vorangegangenen Ansprüche, bei dem der genannte Schalter (6) einen Betätigungshebel (60) federnden Typs einschließt, der geeignet ist, den genannten Schalter (6) zu betätigen, wenn er belastet wird und die genannte interferierende Vorrichtung (2) den genannten Betätigungshebel (60) ausschließlich in einer der genannten vorgegebenen Positionen belastet.

11. Mechanisches Ventil einschließlich eines Aktuators mit verbesserter Sicherheit (1) nach mindestens einem der vorangegangenen Ansprüche, wobei die genannten Verschlussvorrichtungen operativ an den genannten Aktuator (1) angeschlossen sind und von dem genannten Aktuator (1) gesteuert werden.

12. Schloss einschließlich eines Türverriegelungshakens und eines Aktuators mit verbesserter Sicherheit (1) nach mindestens einem der Ansprüche 1 bis 8, wobei der genannte Türverriegelungshaken operativ an den genannten Aktuator (1) angeschlossen ist und von dem genannten Aktuator (1) gesteuert wird.

## Revendications

1. Actionneur avec une sécurité améliorée (1) comprenant :
- un dispositif interférent (2) destiné à interagir avec un ou plusieurs éléments extérieurs et définissant au moins une position de non interférence et au moins une position d'interférence,
- au moins un moteur (3) électrique synchrone, mécaniquement relié audit dispositif interférent (2) et destiné à déterminer au moins un déplacement dudit dispositif interférent (2),
- une unité d'alimentation (4) électrique reliée de manière opérationnelle audit moteur (3) et destinée à alimenter ledit moteur (3) avec au moins une tension d'alimentation alternative bipolaire et monopolaire,
et **caractérisé en ce qu'il** comprend
- un interrupteur (6) relié opérationnellement à ladite unité d'alimentation (4) et actionné par ledit dispositif interférent (2) dans une entre lesdites positions de manière à commuter ladite tension d'alimentation et passer au moins d'une tension alternative bipolaire à une tension alternative monopolaire ou vice versa,
- ledit moteur (3) manutentionnant ledit dispositif interférent (2) en opposition à une force d'opposition.

2. Actionneur avec une sécurité améliorée (1) selon la revendication 1, comprenant un mécanisme de retour élastique (5) destiné à exercer une force de retour élastique sur ledit dispositif interférent (2) quand ledit dispositif interférent (2) passe de ladite position d'interférence à ladite position de non interférence ou vice versa, et où ladite force d'opposition coïncide avec ladite force de retour élastique.

3. Actionneur avec une sécurité améliorée (1) selon la revendication 1, où ladite force d'opposition est une force extérieure audit actionneur et coïncide avec la force gravitationnelle exercée par un corps lié audit dispositif interférent (2).

4. Actionneur avec une sécurité améliorée (1) selon au moins une revendication précédente, où ledit interrupteur (6) comprend une diode et ladite tension d'alimentation alternative monopolaire est réalisée par ladite diode.

5. Actionneur avec une sécurité améliorée (1) selon au moins une revendication précédente, où ledit interrupteur (6) comprend un condensateur disposé électriquement en parallèle par rapport à une partie dudit moteur (3) de manière à ce que ladite tension d'alimentation alternative monopolaire soit toujours non nulle pendant l'utilisation.

6. Actionneur avec une sécurité améliorée (1) selon au moins une revendication précédente, où ledit mécanisme de retour élastique (5) comprend un élément élastiquement déformable destiné à se dilater au moins entre lesdites positions.

7. Actionneur avec une sécurité améliorée (1) selon au moins une revendication précédente, comprenant un châssis (10) destiné à supporter ledit dispositif interférent (2) et ledit moteur (3) et où ledit moteur (3) comprend un arbre de transmission (30) et ledit dispositif interférent (2) comprend un corps excentrique (20) lié audit arbre de transmission (30) et tournant solidairement audit arbre de transmission (30), ledit ressort étant de type torsionnel et lié au moins en partie audit corps excentrique (20) et au moins en partie audit châssis (10).

8. Actionneur avec une sécurité améliorée (1) selon au moins une revendication précédente, comprenant un châssis (10) destiné à supporter ledit dispositif interférent (2) et ledit moteur (3) et où ledit moteur (3) comprend un arbre de transmission (30) et ledit dispositif interférent (2) comprend un actionneur linéaire lié audit arbre de transmission (30) au moyen d'un organe de transmission et manutentionné proportionnellement à la rotation dudit arbre de transmission (30), ledit ressort étant de type linéaire et lié au moins en partie audit actionneur linéaire et au moins en partie audit châssis (10).

9. Actionneur avec une sécurité améliorée (1) selon au moins une revendication précédente, où ledit moteur (3) est du type monophasé à aimant permanent.

10. Actionneur avec une sécurité améliorée (1) selon au moins une revendication précédente, où ledit interrupteur (6) comprend un levier de commande (60) de type élastique destiné à actionner ledit interrupteur (6) lorsque sollicité et ledit dispositif interférent (2) sollicite ledit levier de commande (60) exclusivement dans une desdites positions prédéterminées.

11. Valve mécanique comprenant un actionneur avec une sécurité améliorée (1) selon au moins une revendication précédente, lesdits moyens d'obstruction étant opérationnellement reliés audit actionneur (1) et commandés par ledit actionneur (1).

12. Serrure comprenant un crochet bloque-porte et un actionneur avec une sécurité améliorée (1) selon au moins une revendication 1 à 8, ledit crochet bloque-porte étant opérationnellement relié audit actionneur (1) et commandé par ledit actionneur (1).
